# EUROPÄISCHE PATENTSCHRIFT

(11) **EP 2 257 203 B1**
(45) Veröffentlichungstag und Bekanntmachung des Hinweises auf die Patenterteilung: **16.10.2013**
(21) Anmeldenummer: 09728350.1
(22) Anmeldetag: 13.03.2009
(51) Int. Cl.: A47F 9/04, B65G 19/02, B65G 19/22

(54) **TRANSPORTVORRICHTUNG MIT VERFAHRBAREN MITNEHMERN**
TRANSPORT DEVICE HAVING DISPLACEABLE DOGS
DISPOSITIF DE TRANSPORT COMPORTANT DES ORGANES D'ENTRAÎNEMENT DÉPLAÇABLES

(30) Priorität: 02.04.2008 DE 202008004490 U
(43) Veröffentlichungstag der Anmeldung: 08.12.2010
(73) Patentinhaber: Wincor Nixdorf International GmbH, 33106 Paderborn (DE)
(72) Erfinder: TWISTE, Josef, 33100 Paderborn (DE)
(74) Vertreter: Richly, Erik
(86) Internationale Anmeldenummer: PCT/EP2009/001830
(87) Internationale Veröffentlichungsnummer: WO 2009/121472

(56) Entgegenhaltungen:
- CH-A5- 609 277
- DE-A1-102006 024 559
- FR-A- 2 732 877
- JP-U- 51 068 785
- JP-U- 55 167 911
- US-A- 4 366 896
- US-A1- 2007 179 002

## Beschreibung

Die Erfindung betrifft eine Transportvorrichtung mit senkrecht zur Transportrichtung angeordneten und in Transportrichtung verfahrbaren Mitnehmern, welche durch eine Umlenkwalze umgelenkt werden.

Derartige Vorrichtungen werden beispielsweise im Selbstbedienungskassenbereich eines Warenhauses zum Transport der von einem Kunden ausgewählten Gegenständen eingesetzt. Bei den zu transportierenden Gegenständen handelt es sich um Waren. US2007/179002A1 beschreibt ein Förderband, CH609277A5 beschreibt eine Rotationsdruckmaschine, und FR 2 732 877 beschreibt eine Transportvorrichtung zur Verwendung in einem Kassensystem.

Bei herkömmlichen Kassensystemen werden die Waren vom Käufer auf ein Transportband gelegt und von diesem in Richtung zur Kasse transportiert. Dort nimmt die Kassierkraft die Ware einzeln vom Band und scannt den Barcode der Ware ein. Anschließend legt die Kassierkraft die erfasste Ware auf ein nachfolgendes Transportband, das die Ware in einen Vorratsbereich befördert, aus dem die Ware dann vom Käufer entnommen werden kann.

In jüngster Zeit werden verstärkt selbstbediente Kassen, sogenannte Self-Check-Out-Kassen, im Handel eingesetzt. An diesen selbstbedienten Kassen fährt der Kunde mit seinem Einkaufswagen in den Kassenbereich, entnimmt die einzelne Ware aus seinem Einkaufswagen, scannt den Barcode der Ware und legt die Ware in vorbereitete Tüten ab. Die Tüten stehen auf einer Waage, die das Gewicht der einzelnen Ware erfasst und mit Warendaten, die in einer Datenbank gespeichert sind, vergleicht. Nachdem der Kassiervorgang abgeschlossen ist, entnimmt der Kunde die von ihm befüllten Tüten.

Es ist ein Nachteil dieser Vorgehensweise, dass nur eine begrenzte Anzahl von Tüten zur Verfügung steht. Werden mehr Waren gekauft, als von den vorhandenen Tüten aufgenommen werden können, so muß das Personal eingreifen, was zu Verzögerungen im Kassierablauf führt.

Es ist daher erstrebenswert, den Kassiervorgang auch beim selbstbedienten Kassieren dem herkömmlichen Kassiervorgang mittels Kassierkraft weitestgehend nachzubilden. Dazu werden Kassensysteme entwickelt, bei denen der Kunde die Waren, wie bisher, auf ein Transportband einzeln ablegt. Das Transportband transportiert dann die Waren an einem stationären Barcodescannersystem vorbei in einen Vorratsbereich, aus dem der Kunde die vom Scannersystem erfassten Waren wieder entnimmt. Das Barcodescannersystem besteht aus mehreren Scannern, die so angeordnet sind, dass der Barcode der Ware in jeder Lage der Ware auf dem Transportband sicher erkannt wird. Auch unterhalb der Transportebene befindet sich mindestens ein Scanner.

Ein solches 360°-Barcodescannersystem besitzt zwei getrennte Transportbänder, nämlich ein Eingangstransportband und ein Ausgangstransportband. Zwischen beiden Transportbänder ist der unterhalb der Transportebene vorhandene Scanner angeordnet. Dieser Scanner scannt durch eine Glasplatte nach oben und erfasst den Barcode derjenigen Waren, deren Barcode nach unten zeigt. Damit jede Ware vom Eingangstransportband über die Scannerglasplatte zum Ausgangstransportband transportiert werden kann, ist eine weitere Transportvorrichtung erforderlich, die die Ware über die Scannerglasplatte schiebt. Diese Transportvorrichtung ist leiterartig mit mehreren senkrecht zur Transportrichtung verlaufenden Mitnehmern, die an ihren Außenseiten mittels Gurten oder Ketten in Transportrichtung gezogen werden, ausgebildet. Die Transportvorrichtung ist oberhalb des Transportbandes angeordnet und wird mit der gleichen Geschwindigkeit wie das Transportband betrieben. Durch die leiterartige Struktur der Transportvorrichtung wird die Ware vom Mitnehmer vom Eingangstransportband über die Scannerglasplatte auf das nachfolgende Ausgangstransportband geschoben. Der Kunde legt dabei in jeweils ein durch zwei hintereinander angeordnete Mitnehmer gebildetes Fach genau eine Ware.

Die Mitnehmer ragen notwendigerweise um ein geringes Maß über die Transportebene des Transportbandes nach oben hinaus. Beim Umlenken der Mitnehmer an den Umlenkwalzen müssen sie einen Spalt zwischen dem so gebildeten Transportband und einem nachfolgenden System, wie beispielsweise einer Rutsche oder einem Vorratsbereich passieren. Die minimale Spaltbreite ist dabei durch die Höhe der Mitnehmer vorgegeben. In diesen Spalt können Produkte fallen, wodurch es zu Störungen im Kassierablauf kommen kann. Eine solche Transportvorrichtung entspricht dem Oberbegriff des Anspruchs 1.

Es ist Aufgabe der Erfindung, den Spalt zwischen der Transportvorrichtung und einem weiteren System möglichst klein zu halten.

Diese Aufgabe wird gelöst mittels einer Transportvorrichtung nach Anspruch 1.

Erfindungsgemäß wird beim Umlenken der Mitnehmer in eine Nut in der Umlenkwalze versenkt. Ein angrenzendes System kann deshalb bis an die äußere Mantelfläche der Umlenkwalze herangeführt werden, so dass der Spalt minimiert wird. Dabei kann es sinnvoll sein, dass der Mitnehmer um ein geringes Maß aus der Nut hervorsteht, um die Ware noch mit einem Rest an Formschluß über die Umlenkwalze zu schieben. Die Nuttiefe kann aber auch genau auf die Höhe des Mitnehmers abgestimmt sein, sodass der Mitnehmer bündig mit der äußeren Mantelfläche abschließt.

Nachfolgend wird die Erfindung anhand eines in der Zeichnung dargestellten Ausführungsbeispiels näher erläutert.

In der Zeichnung zeigen:
- Fig. 1: einen Abschnitt einer Transportvorrichtung mit den Merkmalen der Erfindung in perspektivischer Draufsicht,
- Fig. 2: den Abschnitt der Transportvorrichtung gemäß Fig. 1 im Längsschnitt.

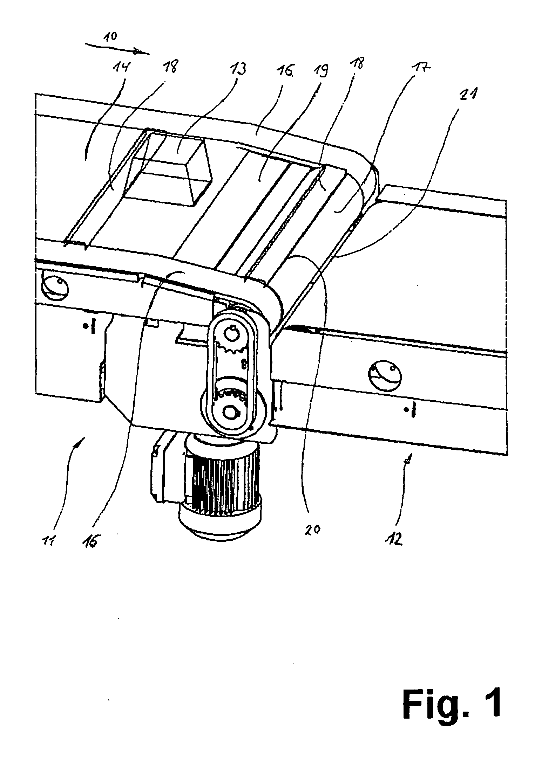

In Fig. 1 der Zeichnung ist der in Transportrichtung 10 vordere Teil einer Transportvorrichtung 11 dargestellt. An die Transportvorrichtung 11 schließt sich ein zusätzliches Transportband 12 an. Waren 13, die zunächst auf der Transportvorrichtung 11 transportiert werden, werden an deren Ende an das Transportband 12 übergeben und weiter transportiert. Bei dem Transportband 12 handelt es sich um ein bekanntes Transportband, wie es in zahlreichen Kassensystemen zum Einsatz kommt. Transportband 12 ist unterhalb der Transportvorrichtung 11 angeordnet, um die Übergabe der Ware 13 zu erleichtern.

Die Transportvorrichtung 11 weist ein mitlaufendes Transportband 14 auf, welches über Umlenkwalzen 15 umgelenkt wird. Zu beiden Längsseiten des Transportbandes 14 sind Gurte angeordnet, welche ihrerseits durch eine in Transportrichtung 10 gesehene hintere nicht dargestellte Umlenkwalze und durch eine vordere Umlenkwalze 17 umgelenkt werden. Zwischen den Gurten 16 sind senkrecht zur Transportrichtung 10 verlaufende Mitnehmer 18 angeordnet, welche zusammen mit den Gurten 16 umlaufen und mit diesen strickleiterartig verbunden sind. Die Mitnehmer 18 verschieben die Ware 13 auf der Transportvorrichtung 11. Transportband 14 und Mitnehmer 18 weisen vorteilhafterweise die gleiche Geschwindigkeit auf, so dass zwischen Ware 13 und Transportband 14 keine Reibung entsteht. Im Bereich zwischen der Umlenkwalze 15 des Transportbandes 14 und der Umlenkwalze 17 der Gurte 16 bzw. der Mitnehmer 18 ist eine fest angeordnete plattenartige schräge Rampe 19 vorgesehen.

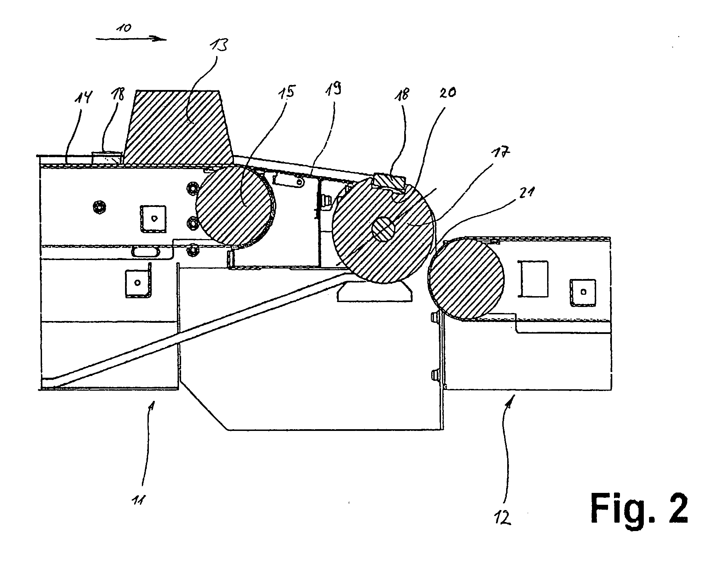

Aus Fig. 2 der Zeichnung ist ersichtlich, dass wenigstens die vordere Umlenkwalze 17 für die Gurte 16 bzw. die Mitnehmer 18 eine Nut 20 aufweist, in welcher jeweils ein Mitnehmer 18 beim Umlenken aufgenommen wird. Im vorliegenden Beispiel ist die Tiefe der Nut 20 geringfügig kleiner als die Höhe der Mitnehmer 18, so dass der Mitnehmer 18 etwas über die Mantelfläche der Umlenkwalze 17 hervorsteht. Dadurch kann ein Spalt 21 zwischen der Umlenkwalze 17 und dem nachfolgenden Transportband 12 sehr klein gehalten werden. Die Gefahr, dass Ware 13 in diesen Spalt 21 fällt, wird somit minimiert.

Die Umlenkwalze 17 kann, wie im vorliegenden Beispiel, eine Nut 20 oder auch mehrere Nuten 20 aufweisen. Der Durchmesser der Umlenkwalze 17 und der Abstand zwischen den einzelnen Nuten 20 ist dabei auf den Abstand von zwei aufeinander folgenden Mitnehmern 18 abzustimmen. Im dargestellten Beispiel weist die Umlenkwalze 17 einen Umfang auf, der genau dem Abstand von zwei benachbarten Mitnehmern 18 entspricht.

### Bezugszeichenliste

- 10: Transportrichtung
- 11: Transportvorrichtung
- 12: Transportband
- 13: Ware
- 14: Transportband
- 15: Umlenkwalze
- 16: Gurt
- 17: Umlenkwalze
- 18: Mitnehmer
- 19: Rampe
- 20: Nut
- 21: Spalt

## Patentansprüche

1. Transportvorrichtung (11) mit einem Transportband (14) und senkrecht zur Transportrichtung (10) angeordneten und in Transportrichtung (10) verfahrbaren Mitnehmern (18), welche durch eine Umlenkwalze (17) umgelenkt werden, wobei die Mitnehmer (18) an ihren Außenseiten mittels Gurten oder Kette (16) in Transportrichtung oberhalb der Transportebene des Transportbandes (14) gezogen werden, **dadurch gekennzeichnet, dass** die Umlenkwalze (17) wenigstens eine Nut (20) zur Aufnahme wenigstens eines der Mitnehmer (18) aufweist.

2. Transportvorrichtung (11) nach Anspruch 1, **dadurch gekennzeichnet, dass** die Tiefe der Nut (20) der Höhe der Mitnehmer (18) entspricht.

3. Transportvorrichtung (11) nach Anspruch 1, **dadurch gekennzeichnet, dass** die Tiefe der Nut (20) geringer ist als die Höhe der Mitnehmer (18).

## Claims

1. Transport apparatus (11) having a transport belt (14) and dogs (18) which are arranged perpendicularly in the transport direction (10), can be moved in the transport direction (10) and are deflected by a deflection roller (17), the dogs (18) being pulled on their outer sides in the transport direction above the transport plane of the transport belt (14) by means of belts or a chain (16), **characterized in that** the deflection roller (17) has at least one groove (20) for receiving at least one of the dogs (18).

2. Transport apparatus (11) according to Claim 1, **characterized in that** the depth of the groove (20) corresponds to the height of the dogs (18).

3. Transport apparatus (11) according to Claim 1, **characterized in that** the depth of the groove (20) is smaller than the height of the dogs (18).

## Revendications

1. Dispositif de transport (11) comprenant une bande transporteuse (14) et des organes d'entraînement (18) disposés perpendiculairement à la direction de transport (10) et déplaçables dans la direction de transport (10), lesquels sont renvoyés par un rouleau de renvoi (17), les organes d'entraînement (18) étant tirés au niveau de leurs côtés extérieurs au moyen de courroies ou d'une chaîne (16) dans la direction de transport au-dessus du plan de transport de la bande transporteuse (14), **caractérisé en ce que** le rouleau de renvoi (17) présente au moins une rainure (20) pour recevoir au moins l'un des organes d'entraînement (18).

2. Dispositif de transport (11) selon la revendication 1, **caractérisé en ce que** la profondeur de la rainure (20) correspond à la hauteur des organes d'entraînement (18).

3. Dispositif de transport (11) selon la revendication 1, **caractérisé en ce que** la profondeur de la rainure (20) est inférieure à la hauteur des organes d'entraînement (18).
